# EUROPEAN PATENT SPECIFICATION

(11) **EP 0 606 223 B1**
(45) Date of publication and mention of the grant of the patent: **05.03.1997**
(21) Application number: 92916190.9
(22) Date of filing: 10.07.1992
(51) Int. Cl.: F16L 3/02, F16L 3/22

(54) **A CLAMPING DEVICE FOR THE CLAMPING OF A TUBE OR THE LIKE TO A BASE**
HALTEVORRICHTUNG FÜR DAS FESTKLEMMEN EINES ROHRES ODER ÄHNLICHEM AN EINEM SOCKEL
DISPOSITIF DE FIXATION D'UN TUBE OU ANALOGUE A UN SUPPORT

(30) Priority: 12.07.1991 NO 912743
(43) Date of publication of application: 20.07.1994
(73) Proprietor: ELVEGAARD, Eilif, N-1600 Fredrikstad (NO)
(72) Inventor: ELVEGAARD, Eilif, N-1600 Fredrikstad (NO)
(74) Representative: Jensen, Peter Kim
(86) International application number: NO9200122
(87) International publication number: WO9301439

(56) References cited:
- WO-A-91/10072
- AT-B- 373 048
- DE-A- 2 517 745
- GB-A- 2 231 635

## Description

The invention relates to a clamping device for the clamping of one or more tubes or the like to a support, comprising a base member having at least one recess for receiving a tube or the like, the recess being outwardly open and at its opening being formed with a narrowed portion for gripping an inserted tube, a top plate for bearing against the base member at the side facing away from the support, and at least one fastening element extending through aligned holes in the top plate and the base member and arranged for a attachment to the support.

Previously known clamping devices of the above-mentioned type usually have a base member consisting of a pair of equal halves of a corrosion-resistant material, such as a suitable plastic, which are kept together by through-going screws. The drawbacks of such clamps are that they consist of several elements and are relatively time-consuming to mount or dismount.

There are also known clamps which are made of plastic in one piece, and having recesses for one or more tubes. Such clamps firstly are fastened to the base or support, with the recess for the tube facing outwards, so that the tube thereafter may be pressed in place in the clamp. The drawbacks of clamps of this type are that they have a very limited ability to retain the tube with a sufficiently large force in installed position. Because of the fact that the resilience and the configuration of the recess must be adapted so that the tube easily may be pressed into the clamp, the force which is necessary for pulling the tube out of the clamp also becomes correspondingly small. The fastening screws only hold the clamp to the support, and the force retaining the tube in the clamp is only the resilience of the clamp material, without influence of the fastening screws. It is also known to furnish such clamps with an upper member for achieving greater firmness.

There also exist clamps of the above-mentioned type which are designed as a double clamp having a centrally disposed fastening screw, and having a recess on each side of the screw for equal tube diameters. In order to be able to install tubes of varying diameters, insert sleeves have to be used. The drawback of such clamps then is that they include several elements, and that they have to be dismounted in order to be able to mount several clamps on top of each other, and then with the use of correspondingly longer screws.

From WO-A-9 110 072 a clamping device of the above-mentioned type is known which comprises of more separate members such as a clip or base member, a top plate, a support and a fastening screw which have to be kept separate or separated before use.

The object of the invention is to provide a clamping device which completely eliminates the above-mentioned drawbacks, and which reduces the mounting time in relation to known clamp types at the same time as the clamp also may be dismounted simply and quickly, without taking apart elements of the clamps, so that loose elements or components are avoided.

The above-mentioned object is achieved by means of a clamping device as described in claim 1.

An advantageous embodiment of the clamping device is characterized in that the top plate has a portion projecting outside the base member and which is provided with at least one hole or slot which is adapted for introduction and locking of a respective fastening screw on an additional corresponding clamping device.

The clamping device according to the invention results in several advantages with respect to manufacture, stock-keeping, component ordering, mounting/dismounting time and total cost. The clamp can be delivered to the user fully preassembled with all components or elements, ready for use and consisting of only one unit, without loose elements of any kind. None of the elements are to be disassembled prior to mounting. The clamp can also be dismounted without disassembling any elements, so that the clamp also after dismounting is in the same condition, and can be used again.

The clamping device may be used in fastening or clamping of tubes, cables or the like, singly or several side by side. Thanks to the outwardly open recess and the gripping configuration thereof, all the necessary clamps on a tube length may be attached to the tube, so that the tube with attached clamps may be placed as a unit on the support or base to which the tube is to be fastened.

When using the above-mentioned advantageous embodiment wherein the top plate has a fastening portion projecting outside the base member, one or more clamps may be mounted on top of an already mounted clamp, for the clamping of tubes at several levels, without the use of any extra element, and without dismounting of or interference in the clamping device or clamping devices which is/are mounted. A clamp at any place in a stack of clamps which are mounted on top of each other, may be dismounted and possibly replaced by a clamp for another tube dimension, without dismounting neither the underlying nor the overlying clamp.

The invention will be further described below in connection with exemplary embodiments with reference to the drawings, wherein
Fig. 1 shows a front view of an embodiment of a clamping device according to the invention;
Fig. 2 shows a side view of the clamping device in Fig. 1;
Fig. 3 shows a side view of another embodiment of the clamping device according to the invention;
Fig. 4 shows the top plate in the embodiment according to Fig. 3 as viewed from above; and
Fig. 5 shows a side view of a pair of clamps according to Fig. 3 mounted on top of each other.

In the drawings, corresponding elements are designated by the same reference numeral in the various Figures.

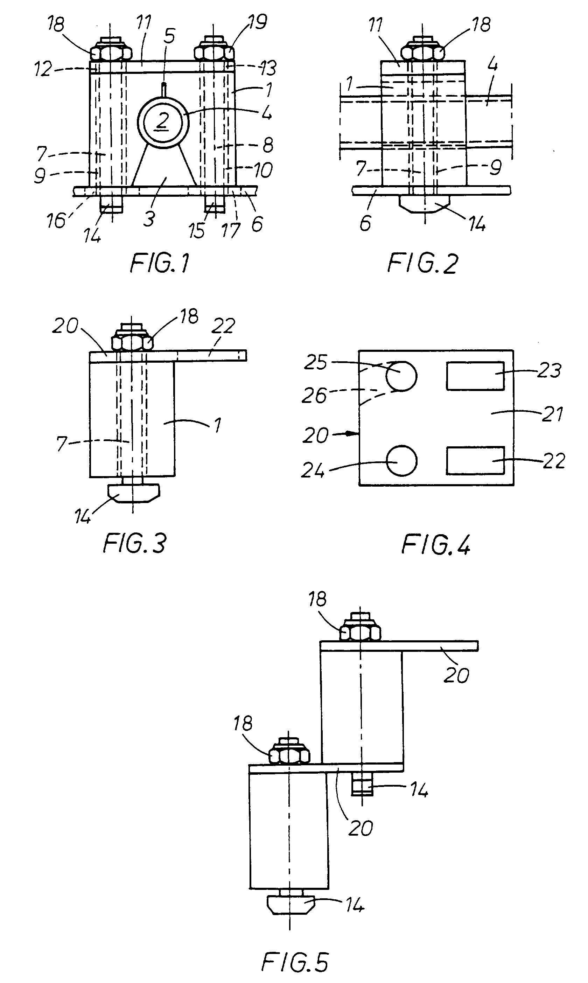

As appears from the drawing, the clamping device in Figs. 1 and 2 comprises a base member 1 which is provided with an outwardly open recess 2 which extends transversely through the base member and within the opening 3 has a part-cylindrical portion for receiving a suitably dimensioned tube 4. The tube is inserted laterally through the lead-in opening 3 which, in the illustrated embodiment, tapers off inwards from the underside of the base member 1, so that the opening at the transition to the part-cylindrical portion is narrowed and narrower than the outer diameter of the tube 4. Thus, in its inserted position, the tube is gripped by the base member and kept in place in the recess.

In order to enable lateral introduction of the tube (or the like) which is to be fastened, the base member in the illustrated embodiment is made of a suitable resilient material, such as a suitable plastics. In order to increase the resilience and further facilitate the tube introduction, the base member is provided with a slot 5 extending a distance into the material from the bottom of the recess 2.

The base member 1 is fastened to a support 6 by a pair of fastening screws 7, 8 which are passed through respective holes 9, 10 extending through the base member on either side of the recess 2 at right angles to the longitudinal axis thereof. A top plate 11 is placed in and bears against the upper side of the base member, and the fastening screws are also passed through respective holes 12, 13 in the top plate, these holes being aligned with the holes 9, 10 in the base member. The top plate is made of a material which is not inflammable and which can sustain a very high temperature, preferably metal. Thus, the top plate together with the two fastening screws ensure that the tube does not fall out of and create problems in the case of a fire at the place of use.

The fastening screws of the clamping device are constituted by screw bolts keeping the above-mentioned components together as a preassembled and mounting-ready unit. For this purpose the screw bolts, at the end which is to be fastened to the support, have a head which can be passed through an adapted hole or slot in the support, and locked against the support by tightening of a locking nut threaded onto a thread at the other end of the bolt.

In the illustrated embodiment, the fastening screws 7, 8 are locking screws of the known and commercially available type which are denoted T screws. As suggested in Figs. 1 and 2, these screws have a T-shaped head portion 14 and 15, respectively, which can be passed through an adapted elongate hole 16 and 17, respectively, in the support 6, and which - under the head - has a stop lug (not shown) which, with 90° rotation of the screw, locks the screw against continued rotation in the hole with tightening of the associated nut 18 and 19, respectively, of the screw. The holes in the support may have the same shape as the rectangular holes shown in the top plate in Fig. 4 which is to be further described later.

As an alternative to the above-mentioned T screws, the fastening screws may be usual locking screws having a head which can be passed through a keyhole-shaped hole in the support, and having a collar formed under the head, usually in the form of a square screw cross-section, which - with introduction into the narrow portion of the "keyhole" - locks the screw against rotation, so that its nut can be tightened. (This embodiment is not shown in the drawing.)

It will be clear that the length of the locking screws in practice will be adapted to the thickness of the topical support, so that the desired locking is achieved immediately when the clamping device is brought in place in the intended holes in the support and the locking nuts have been tightened with a suitable wrench.

In the embodiment according to Figs. 1 and 2 the base member 1 is provided with only one recess. If desired, however, the base member may be provided with several recesses side by side, possibly adapted for receiving respective tubes or the like having different dimensions.

Further, the base member 1 is shown to be formed in one piece, of a suitable resilient material. However, it may for instance also be divided in two parts located on either side of and defining the recess, and having a through-going hole for an associated fastening screw, as in Fig. 1, so that the parts are kept together as a unit. In this case the base member may consist of a non-resilient material, e.g. metal, the clearance between the fastening screws and the holes in the top plate then giving the necessary relative freedom of movement of the components for allowing the lateral introduction of the topical tube (or the like) in the recess of the clamp.

In the illustrated embodiment the clamping device includes two fastening screws, one on either side of the recess. However, it is also conceivable for the clamping device to have only one fastening screw of the type described above. In this case the top plate may, e.g., be formed as an angle iron, i.e. with an angular leg projecting downwards at the side of the base member which is without a fastening screw, to thereby attend to the function of the "missing" fastening screw with respect to securing of a clamped tube, even if the base member should melt or burn up in the case of a fire.

In the embodiment in Figs. 1 and 2 the lead-in opening 3 of the recess is shown to face downwards towards the support 6. However, the base member may also be inverted, so that the opening faces the top plate 11, i.e. away from the support. In this case the top plate must be formed so as to be able to pivot about its fastening screw, or about one of the fastening screws if the clamp includes a pair of fastening screws, to be able to expose said opening in mounting or dismounting of a tube, without dismounting the clamp itself. For this purpose the top plate may be provided with an open screw passage from one side edge to the screw hole in question, for example in the form of a curved slot with the other screw hole in the top plate as the centre of curvature, as shown with dashed lines in Fig. 4.

The above-mentioned embodiment with a pivotable top plate also makes possible an embodiment wherein the clamping device includes a pair of base members according to Fig. 1 placed on top of each other and turned in opposite directions, or possibly formed in one piece, wherein one recess is open towards the support and the other towards the top plate.

Figs. 3 and 4 show another embodiment of the clamping device. This embodiment is identical with the embodiment in Figs. 1 and 2 except for the design of the top plate 20 which here has an extension portion 21 projecting a distance outside the base member 1 and being provided with a pair of holes 22, 23 which are adapted for introduction and locking of a pair of fastening screws on an additional, corresponding clamping device, as shown in Fig. 5. The holes 22, 23 therefore have a mutual distance which is equal to the distance between the holes 24, 25 in the top plate for the fastening screws (7 and 8 in Fig. 1) of the clamp, and they are rectangular in a manner corresponding to the holes 16, 17 in the support 6. The holes 22, 23 possibly could be replaced by open slots debouching at the right side edge of the top plate in Fig. 4, and they could also have another shape than that which is shown, dependent on the type of fastening screws which is used for the clamps.

In order to obtain a pivotable top plate in connection with a recess opening facing the top plate, the top plate may, as mentioned above, be provided with a curved lead-in slot 26 (shown with dashed lines) having a radius of curvature corresponding to the centre distance between the holes 24 and 25.

Fig. 5 shows a pair of clamps according to Fig. 3 which are mounted on top of each other by means of the extended top plate. It should be mentioned here that the top plate may also be further extended, to give space for more than one clamp for mounting on top of a lower clamp.

As regards the support or base for mounting of the clamp according to the invention, this may have a standardized design having a suitable hole pattern for receiving the current type of locking screws. It may also be practical to make use of prefabricated profiles or rails having suitable perforations (hole pattern), for fastening of clamps as well as for fastening of the profiles to different supports, with screws as well as by means of welding. Such elements may be cut to desired lengths at the place of mounting.

## Claims

1. A clamping device for the clamping of one or more tubes or the like to a support, comprising a base member (I) having at least one recess (2) for receiving a tube (4) or the like, the recess (2) being outwardly open and at its opening (3) being formed with a narrowed portion for gripping an inserted tube (4), a top plate (11) for bearing against the base member (1) at the side facing away from the support (6), and at least one fastening element (7; 8) extending through aligned holes (12, 9; 13, 10) in the top plate (11) and the base member (1) and arranged for attachment to the support (6), wherein the fastening element (7; 8) is a locking screw which, by means of a head (14; 15) at one end and a nut (18; 19) at the other end, keeps said components (1, 7, 11) of the clamping device together as a completely preassembled, ready to mount unit without any loose parts, the head (14;15) of the screw (7; 8) being located at the end to be fastened to the support (6) and, in a manner known per se, being arranged to be passed through an adapted hole (16; 17) or slot in the support (6), and to be locked against the support by tightening of the nut (18; 19) of the screw, the opening (3) facing either the support (6) or the top plate (11), the top plate in the latter case being formed so as to be pivotable about the locking screw (7; 8), so as to be able to expose the opening (3) with said components assembled as a unit.

2. A clamping device according to claim 1, **CHARACTERIZED IN that** it includes a pair of locking screws (7, 8) extending through respective aligned holes (12, 13 resp. 9, 10) in the top plate (11) and the base member (1), on either side of the recess (2).

3. A clamping device according to claim 1 or 2, **CHARACTERIZED IN that** the locking screw or each locking screw (7; 8) is of the type having a T-shaped head portion (14; 15) which can be passed through an adapted elongate hole (16; 17) in the support (6), and which under the head has a stop lug which, with 90° rotation of the screw (7; 8), locks the screw against continued rotation in the hole with tightening of the associated nut (18; 19).

4. A clamping device according to claim 1 or 2, **CHARACTERIZED IN that** the locking screw or each locking screw has a head which can be passed through a keyhole-shaped hole in the support, and a collar formed under the head which collar, when introduced into the narrow portion of the keyhole, locks the screw against rotation.

5. A clamping device according to any of the preceding claims, **CHARACTERIZED IN that** the top plate (20) has a portion (21) projecting outside the base member (1) and which is provided with at least one hole (22; 23) or slot which is adapted for introduction and locking of a respective locking screw (7; 8) on an additional corresponding clamping device.

6. A clamping device according to any of the preceding claims, **CHARACTERIZED IN that** the base member (1) is made of a resiliently yieldable material, such as a suitable plastics.

7. A clamping device according to claim 2 or any of the claims 3-6 dependent from claim 2, **CHARACTERIZED IN that** the base member is divided in two parts located on either side of and defining the recess (2), and of which each has a through-hole for an associated locking screw.

## Patentansprüche

1. Haltevorrichtung für das Festklemmen eines oder mehrerer Rohre oder dergleichen an einem Träger, umfassend ein Basisglied (1) mit mindestens einer Ausnehmung (2) zum Aufnehmen eines Rohrs (4) oder dergleichen, wobei die Ausnehmung (2) nach außen offen ist und an ihrer Öffnung (3) mit einem verengten Bereich ausgebildet ist zum Greifen eines eingeführten Rohrs (4), einer Deckplatte (11) zum Stützen gegen das Basisglied (1) an der Seite, die vom Träger (6) weg gerichtet ist, und mindestens ein Befestigungselement (7; 8), das sich durch fluchtende Löcher (12, 9; 13, 10) in der Deckplatte (11) und dem Basisglied (1) erstreckt und zur Befestigung am Träger (6) angeordnet ist, worin das Befestigungselement (7; 8) eine Sicherungsschraube ist, die mittels eines Kopfes (14; 15) an einem Ende und einer Mutter (18; 19) am anderen Ende, die Teile (1, 7, 11) der Haltevorrichtung als vollständig vorgefertigte und einbaufertige Einheit ohne lose Teile zusammenhält, wobei sich der Kopf (14, 15) der Schraube (7, 8) an dem Ende befindet, das am Träger (6) befestigt werden soll und, auf an sich bekannte Weise, angeordnet ist, daß sie durch ein geeignetes Loch (16, 17) oder einen Schlitz im Träger (6) durchgeführt und durch Anziehen der Mutter (18, 19) der Schraube gegen den Träger gesichert wird, wobei die Öffnung (3), entweder dem Träger (6) oder der Deckplatte (11) gegenübersteht, wobei im letzteren Fall die Deckplatte so ausgebildet ist, daß sie um die Sicherungsschraube (7, 8) drehbar ist, so daß die Öffnung (3) freigelegt werden kann, wobei die Teile als eine Einheit vorgefertigt sind.

2. Haltevorrichtung nach Anspruch 1, dadurch gekennzeichnet, daß sie ein Paar Sicherungsschrauben (7, 8) umfaßt, die sich durch entsprechende fluchtende Löcher (12, 13 bzw. 9, 10) in der Deckplatte (11) und dem Basisglied (1) auf jeder Seite der Ausnehmung (2) erstrecken.

3. Haltevorrichtung nach Anspruch 1 oder 2, dadurch gekennzeichnet, daß die Sicherungsschraube oder jede Sicherungsschraube (7, 8) von der Art mit einem T-förmigen Kopfteil (14, 15) ist, der durch ein geeignetes längliches Loch (16, 17) im Träger (6) geführt werden kann, und die unter dem Kopf einen Stopper aufweist, der bei Drehung der Schraube (7, 8) um 90°, beim Anziehen der zugehörigen Mutter (18, 19) die Schraube gegen fortgesetzte Drehung im Loch sichert.

4. Haltevorrichtung nach Anspruch 1 oder 2, dadurch gekennzeichnet, daß die Sicherungsschraube oder jede Sicherungsschraube einen Kopf aufweist, der durch ein schlüssellochförmiges Loch im Träger geführt werden kann, und einen unter dem Kopf ausgebildeten Bund aufweist, wobei der Bund, wenn er in den engen Teil des Schlüssellochs eingeführt ist, die Schraube gegen Drehung sichert.

5. Haltevorrichtung nach einem der vorhergehenden Ansprüche, dadurch gekennzeichnet, daß die Deckplatte (20) einen Teil (21) aufweist, der außerhalb des Basisglieds (1) vorspringt, und der mit mindestens einem Loch (22, 23) oder Schlitz versehen ist, das (der) geeignet ist zum Einführen und Sichern einer zugehörigen Sicherungsschraube (7, 8) auf einer zusätzlichen entsprechenden Haltevorrichtung.

6. Haltevorrichtung nach einem der vorhergehenden Ansprüche, dadurch gekennzeichnet, daß das Basisglied (1) aus einem federnd nachgebenden Material hergestellt ist, wie einem geeigneten Kunststoff.

7. Haltevorrichtung nach Anspruch 2 oder einem der Ansprüche 3 bis 6 in Abhängigkeit von Anspruch 2, dadurch gekennzeichnet, daß das Basisglied in zwei Teile geteilt ist, die auf jeder Seite einer Ausnehmung (2) angeordnet sind und sie definieren, und von denen jeder ein durchgehendes Loch und eine zugehörige Sicherungsschraube besitzt.

## Revendications

1. Dispositif de fixation pour la fixation de un ou plusieurs tubes ou analogues à un support, comprenant un élément d'embase (1) ayant au moins une cavité (2) pour recevoir un tube (4) ou analogue, la cavité (2) débouchant vers l'extérieur et présentant une partie rétrécie au niveau de son ouverture (3) pour serrer un tube inséré (4), une plaque supérieure (11) pour s'appuyer sur le côté en regard et éloigné du support (6) de l'élément d'embase (1), et au moins un élément de fixation (7, 8) s'étendant à travers des trous alignés (12, 9, 13, 10) de la plaque supérieure (11) et de l'élément d'embase (1) agencé pour la fixation au support (6), dans lequel l'élément de fixation (7, 8) est une vis de blocage qui, au moyen d'une tête (14, 15) à une extrémité et d'un écrou (18, 19) à l'autre extrémité, maintient lesdits composants (1, 7, 11) du dispositif de fixation solidaires en une unité prête à être montée, complètement préassemblée sans aucune partie libre, la tête (14, 15) de la vis (7, 8) se trouvant à l'extrémité devant être fixée au support (6) et étant, d'une manière connue en soi, agencée pour être passée à travers un trou adapté (16, 17) ou une fente du support (6), et pour être bloquée contre le support par serrage de l'écrou (18, 19) sur la vis, l'ouverture (3) faisant face soit au support (6) soit à la plaque supérieure (11), la plaque supérieure étant dans ce dernier cas formée pour pouvoir pivoter autour de la vis de blocage (7, 8) pour pouvoir présenter l'ouverture (3) ensemble avec lesdits composants.

2. Dispositif de fixation selon la revendication 1, caractérisé en ce qu'il comprend une paire de vis de blocage (7, 8) s'étendant à travers des trous respectifs alignés (12, 13 respectivement 9, 10) dans la plaque supérieure (11) et l'élément d'embase (1) de chaque côté de la cavité (2).

3. Dispositif de fixation selon la revendication 1 ou 2, caractérisé en ce que la vis de blocage ou chaque vis de blocage (7, 8) est du type à tête en T (14, 15) qui peut être logée à travers un trou allongé adapté (16, 17) du support, et qui sous la tête a une patte de blocage qui, après une rotation de 90° de la vis (7, 8), bloque la vis en rotation continue dans le trou lors du serrage écrou associé (18, 19).

4. Dispositif de fixation selon la revendication 1 ou 2, caractérisé en ce que la vis de fixation ou chaque vis de fixation a une tête qui peut être logée dans un trou en forme de trou de serrure du support, un collier étant formé sous la tête lequel collier, quand il est introduit dans la partie étroite du trou de serrure, bloque la vis en rotation.

5. Dispositif de fixation selon l'une quelconque des revendications précédentes, caractérisé en ce que la plaque supérieure (20) a une partie (21), faisant saillie en dehors de l'élément d'embase (1) et qui est munie d'au moins un trou (22, 23) ou d'une encoche qui est adaptée pour l'introduction et le blocage d'une vis de blocage correspondante sur un dispositif de fixation additionnel correspondant (7, 8).

6. Dispositif de fixation selon l'une quelconque des revendications précédentes, caractérisé en ce que l'élément d'embase (1) est constitué d'un matériau déformable élastiquement, tel qu'une matière plastique appropriée.

7. Dispositif de fixation selon la revendication 2 ou l'une quelconque des revendications 3 à 6 dépendantes de la revendication 2, caractérisé en ce que l'élément d'embase est divisé en deux parties situées de part et d'autre et définissant la cavité (2), et dont chacune est traversée par un trou pour une vis de blocage associée.
